(19) Europäisches Patentamt
European Patent Office
Office européen des brevets

(11) EP 4 733 755 A1

# (12) EUROPEAN PATENT APPLICATION

(43) Date of publication:
**29.04.2026 Bulletin 2026/18**

(21) Application number: **25181983.5**

(22) Date of filing: **11.06.2025**

(51) International Patent Classification (IPC):
***G01N 29/06*** *(2006.01)* ***G01N 29/22*** *(2006.01)*
***G01N 29/44*** *(2006.01)*

(52) Cooperative Patent Classification (CPC):
**G01N 29/0645; G01N 29/069; G01N 29/226; G01N 29/4481;** G01N 2291/0258; G01N 2291/0289; G01N 2291/044; G01N 2291/2634

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.10.2024 KR 20240145239**

(71) Applicant: **Kepco Engineering & Construction Company, Inc.**
**Gimcheon-si**
**Gyeongsangbuk-do**
**39660 (KR)**

(72) Inventors:
- **Kim, Kyung tae**
  **Gimcheon-si, Gyeongsangbuk-do (KR)**
- **Jang, Kag su**
  **Gimcheon-si, Gyeongsangbuk-do (KR)**
- **KANG, Ji yeon**
  **Gumi-si, Gyeongsangbuk-do (KR)**

(74) Representative: **BCKIP Part mbB**
**MK1**
**Landsbergerstraße 98, 3.Stock**
**80339 München (DE)**

## (54) AI-BASED ULTRA-FINE CRACK DETECTION SYSTEM FOR PLANT SYSTEM STABILITY DIAGNOSIS

(57) Disclosed is an AI-based ultra-fine crack detection system for a plant system stability diagnosis, which includes: a small modular reactor constituted by a plurality of systems; and an ultra-fine crack detection device determining, based on reflection signals for at least some systems of the plurality of systems, crack growth rate degrees of the at least some systems, in which the ultra-fine crack detection device includes a sensor module emitting acoustic signals toward inspection points of the at least some systems of the plurality of systems, and then receiving the reflection signal reflected from the inspection points with respect to the emitted acoustic signals, and a genetic algorithm module determining crack growth rate degrees corresponding to the received reflection signals based on a probabilistic crack growth rate mapping table.

[FIG. 5]

445
Threshold dentification unit
446
Signal analysis unit
447
Output and storage unit
444
Main amplifier
443
Band-pass filter
448
AI neural network
449
Probabilistic crack growth rate determination
441
Acoustic emission sensor
Operation amplification unit
442
Genetic algorithm module
Probabilistic crack growth rate based genetic algorithm application and preventive maintenance scheduling
441a
Crack inspection body

EP 4 733 755 A1

## Description

[Technical Field]

Embodiments disclosed herein relate to an AI-based ultra-fine crack detection system for a plant system stability diagnosis.

[Background Art]

Electricity used in daily life can be supplied to households through various methods such as wind power generation, thermal power generation, hydroelectric power generation, and nuclear power generation. Among them, the nuclear power generation is power generation using nuclear power as an energy source, and electricity can be produced by turning a turbine with steam (e.g., saturated steam or superheated steam) generated using energy through a nuclear fission chain reaction.

With the advent of the global carbon-neutral era, nuclear power plants, which are power generation sources that do not emit carbon, are also generating electricity. In recent years, a small modular reactor referred to as a small modular reactor (SMR) having high safety and economic efficiency has attracted attention.

The SMR introduces a modular construction method in the field of construction, and can be constructed in a form in which components constituting a reactor are manufactured in a factory and then assembled on site. Accordingly, the SMR can drastically shorten a construction period.

As such, the SMR can be installed not only in countries that require large nuclear power plants but also throughout countries that require small nuclear power plants based on high safety and economics.

Nuclear power plants, including the SMR, have an advantage that they can be easily constructed in a relatively short period of time, unlike large nuclear power plants, but at the same time may require as much meticulous and periodic management after construction. For example, a contact-type piezoelectric conversion sensor is attached to an inspection object of a plant system, whereby cracking of the inspection object can be confirmed.

[Disclosure]

[Technical Problem]

A crack detection technique using a contact-type piezoelectric conversion sensor has a problem in that it is difficult to detect a crack in an inspection object of a plant system when it is difficult to be directly attached to the inspection object due to a structure of an SMR system. In particular, in a situation where a power of a nuclear steam supply system (NSSS) is 100%, when power control (e.g., power reduction) of nuclear power generation is required due to an excess of renewable energy, 80% of the main steam flows into a steam turbine, and the remaining 20% of the main steam is discharged to a condenser, and at this time, a tube of the condenser is very fragile due to thermal stress, but there is a problem in that it is difficult to monitor the tube of the condenser.

Various embodiments disclosed herein may provide an AI-based ultra-fine crack detection system for a plant system stability diagnosis using a contactless detection method and a deep learning algorithm after construction of a small modular nuclear power plant including an SMR.

[Technical Solution]

According to an embodiment, an AI-based ultra-fine crack detection system for a plant system stability diagnosis may include: a small modular reactor constituted by a plurality of systems; and an ultra-fine crack detection device determining, based on reflection signals for at least some systems of the plurality of systems, crack growth rate degrees of the at least some systems, and the ultra-fine crack detection device may include a sensor module emitting acoustic signals toward inspection points of the at least some systems of the plurality of systems, and then receiving the reflection signal reflected from the inspection points with respect to the emitted acoustic signals, and a genetic algorithm module determining crack growth rate degrees corresponding to the received reflection signals based on a probabilistic crack growth rate mapping table.

According to an embodiment, the genetic algorithm module may classify and learn a crack growth rate according to a stress intensity factor for each signal corresponding to each of a primary crack generation source and a secondary crack generation source related to the crack growth rate degree into a plurality of groups.

According to an embodiment, the primary crack generation source may include at least one of plastic deformation, crack growth, dislocation, and phase transformation, and the secondary crack generation source may include at least one of leakage, friction, and a chemical reaction.

According to an embodiment, the genetic algorithm module may perform preventive maintenance scheduling of each of the plurality of systems based on the determined crack growth rate degree, designated maintenance time information, spare part inventory status information, spare part warehousing plan information, and power reserve rate information of the system during preventive maintenance.
According to an embodiment, the ultra-fine crack detection device may further include an output module outputting an audio or an image, and the output module may output, as the audio or image, at least one of information related to the determined crack growth rate degree and information related to the preventive maintenance scheduling.
According to an embodiment, the ultra-fine crack detection device may be a wearable device corresponding to at least one of a smart glass, a smart watch, a smart ring, or a head mounted display (HMD) wearable on a body of a user.
According to an embodiment, the plurality of systems may be divided into a first system at least including a small modular reactor, a pressurizer and a plurality of steam generators, a second system at least including a turbine and a generator, and a third system at least including a condenser and a feedwater source.

[Advantageous Effects]

An AI-based ultra-fine crack detection system for a plant system stability diagnosis according to various embodiments disclosed herein uses a contactless detection method and a deep learning algorithm after construction of a small modular nuclear power plant including an SMR, so that thorough follow-up management can be performed compared to a short construction period of the SMR.
Further, the AI-based ultra-fine crack detection system for a plant system stability diagnosis according to various embodiments disclosed herein can prevent a nuclear power plant accident due to cracks in the plant system based on high sensitivity, online monitoring, minimization of a shutdown time of the nuclear power plant, replacement of an entire structural surface inspection through some structural surface inspections, and the like.
Besides, various effects can be provided that are directly or indirectly understood by the present invention.

[Description of Drawings]

FIG. 1 is a diagram illustrating an artificial neural network structure of deep learning utilized in an AI-based ultra-fine crack detection model for a plant system stability diagnosis according to an embodiment.
FIG. 2 is a diagram illustratively illustrating a plant system which is an AI-based ultra-fine crack detection target for the plant system stability diagnosis according to an embodiment.
FIG. 3 is a diagram illustratively illustrating a small modular reactor (SMR) which is the AI-based ultra-fine crack detection target for the plant system stability diagnosis according to an embodiment.
FIG. 4 is a block diagram of an AI-based ultra-fine crack detection system for a plant system stability diagnosis according to an embodiment.
FIG. 5 is a diagram illustrating preventive maintenance scheduling of the AI-based ultra-fine crack detection target for the plant system stability diagnosis according to an embodiment.
FIG. 6 is a diagram illustrating a process of receiving an elastic wave signal after emitting an acoustic signal of the AI-based ultra-fine crack detection system for the plant system stability diagnosis according to an embodiment.
FIG. 7 is a diagram illustrating a process of receiving an elastic wave signal after emitting an acoustic signal of the AI-based ultra-fine crack detection system for the plant system stability diagnosis according to an embodiment.
FIG. 8 is a flowchart illustrating an AI-based ultra-fine crack detection method for a plant system stability diagnosis according to an embodiment.

In connection with the description of the drawings, identical or corresponding reference numerals may be used for identical or corresponding components.

[Modes for the Invention]

Hereinafter, preferred embodiments of the present invention will now be described in detail with reference to the accompanying drawings. Prior thereto, terms and words used in this specification and claims should not be interpreted as being limited to typical or dictionary meanings, but should be interpreted as having meanings and concepts which comply with the technical spirit of the present invention, based on the principle that an inventor can appropriately define the concept of the term in order for an inventor to describe his/her own invention in the best method.
Therefore, configurations illustrated in the embodiments and the drawings described in this specification are only the most preferred embodiment of the present invention and do not represent all of the technical spirit of the present invention, and thus it is to be understood that various equivalents and modified examples, which may replace the configurations, are possible when filing the present application.

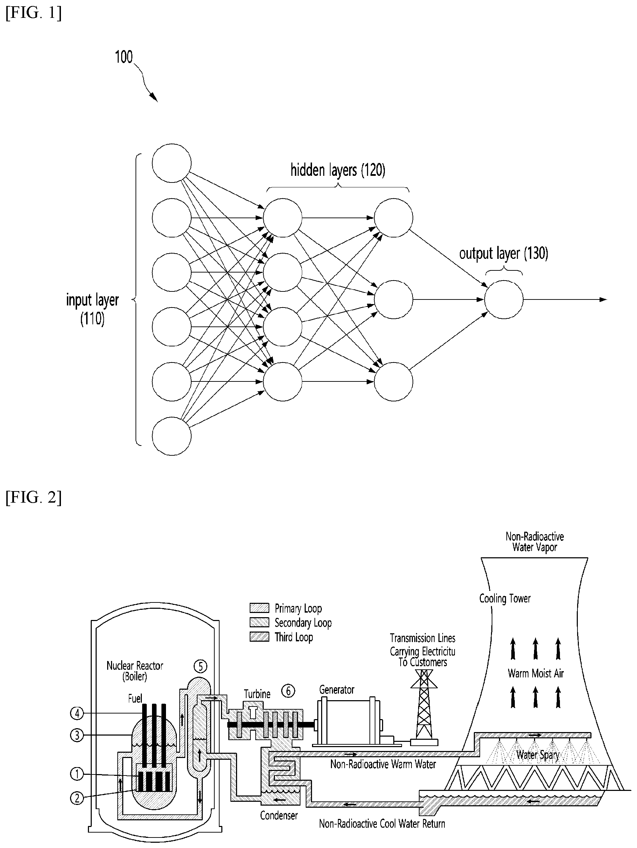

FIG. 1 is a diagram illustrating an artificial neural network structure of deep learning utilized in an AI-based ultra-fine crack detection model for a plant system stability diagnosis according to an embodiment.

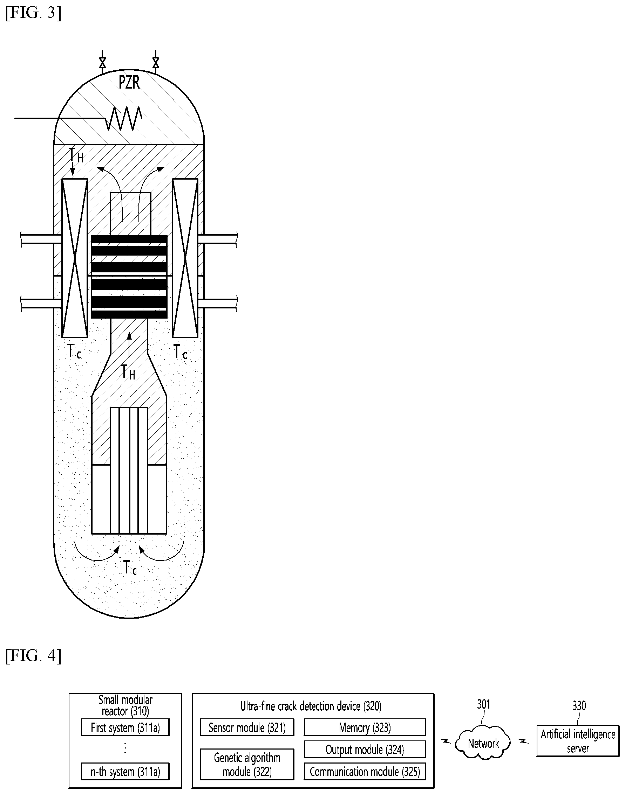

According to an embodiment, an artificial neural network structure 100 may be utilized in a genetic algorithm module (e.g., a genetic algorithm module 422 in FIG. 4) to be described below. For example, the genetic algorithm module may be designed as a learning model related to ultra-fine crack detection of an SMR system based on the artificial neural network structure 100.

According to an embodiment, the artificial neural network structure 100 may include an input layer 110, hidden layers 120, and an output layer 130. In various embodiments, in the artificial neural network structure 100, at least one of the components described above may be omitted or at least one other component may be further included. For example, the artificial neural network structure 100 may include only a single hidden layer between the input layer 110 and the output layer 130.

According to an embodiment, the input layer 110 may receive at least one input variable for predicting an output variable of the output layer 130. For example, a stress intensity factor of a signal (e.g., an elastic wave signal) corresponding to a crack generation source may be stored in the input layer 110 through at least one node. In various embodiments, different input variables may be stored in each of the nodes of the input layer 110. For example, a first node of the input layer 110 may store a stress intensity factor of a burst signal corresponding to a primary crack generation source, and a second node of the input layers 110 may store a stress intensity factor of a continuous signal corresponding to a secondary crack generation source.

According to an embodiment, the hidden layers 120 may receive at least one input variable from the input layer 110 and transmit the input variable to the output layer 130. For example, the hidden layers 120 may calculate a weighted sum of an input variable received from the input layer 110 and apply the calculated weighted sum to a transition function (e.g., a non-linear function) to transmit the output variable to the output layer 130. In various embodiments, when receiving different variables from the input layer 110, the hidden layers 120 may calculate weighted sums for each of the different variables and apply the calculated weighted sums to the transition function to transmit a plurality of different output variables to the output layer 130. For example, the hidden layers 120 may transmit to the output layer 130 the stress intensity factor of the burst signal corresponding to the primary crack generation source and the stress intensity factor of the continuous signal corresponding to the secondary crack generation source.

According to an embodiment, the output layer 130 may receive calculated and applied values from the hidden layers 120, and output an output variable. For example, the output layer 130 may output, as a prediction value, a mapping table in which a crack growth rate according to the stress intensity factor for each signal of the primary crack generation source or the secondary crack generation source is classified into groups corresponding to different levels. In various embodiments, the output layer 130 may receive calculated and applied values from the hidden layers 120, and output a plurality of output variables. For example, the output layer 130 may output, as prediction values, a plurality of first group information classified according to the stress intensity factor of the burst signal corresponding to the primary crack generation source and the plurality of second group information classified according the stress intensity factor of the continuous signal corresponding to the secondary crack generation source.

According to various embodiments, the first and second expressions used for the primary crack generation source, the secondary crack generation source, and the plurality of groups described above may be expressions that illustratively distinguish input variables and output variables in order to infer a plurality of prediction values when designing a genetic algorithm model for the plant system stability diagnosis. Further, the expressions such as first, second, etc., used above may be distinguished from the first and second expressions used when utilizing the genetic algorithm model described below.

FIG. 2 is a diagram illustratively illustrating a plant system which is an AI-based ultra-fine crack detection target for the plant system stability diagnosis according to an embodiment. FIG. 3 is a diagram illustratively illustrating a small modular reactor (SMR) which is the AI-based ultra-fine crack detection target for the plant system stability diagnosis according to an embodiment.

According to an embodiment, the plant system may be divided into a plurality of systems. For example, a nuclear plant system may be divided into a first system at least including a small modular reactor, a primary coolant, a pressurizer, a reactor coolant pump (RCP) and a plurality of steam generators, a second system at least including a steam turbine and a generator, and a third system (yellow portion) at last including a condenser and a feedwater pump. The respective systems may be connected to each other through pipes. Each of the pipes may be marked with an externally identifiable schedule number SCH NO. For example, a schedule number that is enabled to be photographed using a camera may be displayed on a surface of each of the pipes. The schedule number may be information indicating a standard of a pipe. For example, the schedule number may be information for indicating different thicknesses of each of a plurality of pipes.

According to various embodiments, the plant system is not limited to the division of the systems illustrated in FIG. 2. For example, the nuclear plant system including the small modular reactor may be divided into one system including the small-modular reactor, the primary coolant, the pressurizer, the reactor coolant pump and the plurality of steam generators, and a second system including the turbine, the generator, the condenser and the feedwater pump. Here, the first system may be a system that transfers heat generated in the reactor to the primary coolant. Further, the second system may be a system that generates steam using the heat generated by the first system, and uses the steam to generate electricity in the turbine.

According to various embodiments, the AI-based ultra-fine crack detection target for the plant system stability diagnosis may correspond to the small modular reactor (SMR) illustrated in FIG. 3 as well as a general plant system illustrated in FIG. 2.

FIG. 3 is a diagram illustratively illustrating a small modular reactor (SMR) which is the AI-based ultra-fine crack detection target for the plant system stability diagnosis according to an embodiment.

FIG. 4 is a block diagram of an AI-based ultra-fine crack detection system for a plant system stability diagnosis according to an embodiment.

According to an embodiment, an AI-based ultra-fine crack detection system (hereinafter referred to as a crack detection system) for a plant system stability diagnosis may include a small modular nuclear power plant 410, an ultra-fine crack detection device 420, and an artificial intelligence server 430 to determine a crack growth rate degree of the nuclear plant system. The ultra-fine crack detection device 420 may be connected to the artificial intelligence server 430 via a network 401 (e.g., a remote wireless communication network). In various embodiments, the ultra-fine crack detection device 420 may be integrated with the artificial intelligence server 430 and implemented as a single device.

According to an embodiment, the small modular reactor 410 may be constituted by a plurality of systems 411a. For example, the small modular reactor 410 may include a system at least including the small modular reactor, the pressurizer and the steam generator, a second system at least including the turbine and the generator, and a third system at least including the condenser and the feedwater source. In addition, the small modular reactor 410 may further include a feedwater heater, a feedwater pump, and a condensate pump. At least some of the plurality of systems 411a may be in a state of being constructed in a plant site. For example, the first system and the second system are constructed in a state of being connected to each other through designated pipes in the plant site before crack detection using the ultra-fine crack detection device 420.

According to an embodiment, the ultra-fine crack detection device 420 may include a sensor module 421, a genetic algorithm module 422, a memory 423, an output module 424, and a communication module 425. In various embodiments, in the ultra-fine crack detection device 420, at least one of the components described above may be omitted or at least one other component may be further included. For example, the ultra-fine crack detection device 420 may further include an input module (not illustrated) in order to receive a command or data to be used by the genetic algorithm module 422 from an outside (e.g., a user), such as a case where it is desired to detect an ultra-fine crack.

According to an embodiment, the sensor module 421 may emit an acoustic signal of a designated frequency band toward inspection points of at least some systems among a plurality of systems constructed in the plant site, and then receive a reflection signal reflected from a corresponding inspection point for the emitted acoustic signal. For example, the sensor module 421 may emit a sound wave toward a point of a pipe connecting between the first system including the pressurizer and the steam generator and the second system including at least the turbine and the generator, and then receive an elastic wave signal reflected from the point.

According to an embodiment, the genetic algorithm module 422 may determine a crack growth rate degree corresponding to the reflection signal received from the sensor module 421 based on a probabilistic crack growth rate mapping table. For example, the genetic algorithm module 422 may determine the crack growth rate degree by analyzing and diagnosing the elastic wave signal received from the sensor module 421 based on data learned by classifying the crack growth rate according to the stress intensity factor into a plurality of groups for each signal corresponding to each of the primary crack generation source and the secondary crack generation source. Here, the primary crack generation source may include at least one of plastic deformation, crack growth, dislocation, and phase transformation. In addition, the secondary crack generation source may include at least one of leakage, friction, and a chemical reaction.

According to an embodiment, the stress intensity factor may be calculated based on Equation 1 below.

[Equation 1]

$$K_{I} = \sqrt{\frac{\pi a}{Q}} \left(\sigma_m M_m + \sigma_b M_b\right)$$

In [Equation 1] above, $\sigma_m$ may represent a membrane stress.

In [Equation 1] above, $\sigma_b$ may represent a bending stress.

In [Equation 1] above, *a* may represent a crack size.

In [Equation 1] above, $Q$ may represent a flaw shape parameter.

In [Equation 1] above, $M_m$ may represent a correction factor for the membrane stress.

In [Equation 1] above, $M_b$ may represent a correction factor for the bending stress.

According to an embodiment, the genetic algorithm module 422 may perform preventive maintenance scheduling of each of the plurality of systems based on the determined crack growth rate degree, designated maintenance time information, spare part inventory status information, spare part warehousing plan information, and power reserve rate information of the system during preventive maintenance.

According to an embodiment, the genetic algorithm module 422 may be configured to perform temporary maintenance based on the crack growth rate degree before the preventive maintenance is performed on each of the plurality of systems according to the preventive maintenance scheduling. For example, when an output value of a reactor does not conform to a designated output value due to a crack generated in a first system (e.g., a tube of the steam generator), the genetic algorithm module 422 may adjust an output value of the reactor to conform to the designated output value before the preventive maintenance is performed for each of the plurality of systems according to the preventive maintenance scheduling. As a result, the genetic algorithm module 422 may use the adjusted output value as an input value to the second system (e.g., the turbine). For example, the genetic algorithm module 422 may cause the second system to adjust a water feed amount according to the input value based on the adjusted output value. In the second system such as the turbine, an actual output value may be corrected to confirm to the designated output value of the reactor by adjusting the water feed amount based on the input value.

According to an embodiment, the genetic algorithm module 422 may control a fission reaction using a control rod based on the crack growth rate degree described above before the preventive maintenance is performed on each of the plurality of systems according to the preventive maintenance scheduling. For example, when the output value of the reactor does not conform to the designated output value due to the crack generated in the first system (e.g., the tube of the steam generator), the genetic algorithm module 422 may be configured to adjust the number of insertion times of the control rod before the preventive maintenance is performed for each of the plurality of systems according to the preventive maintenance scheduling.

According to various embodiments, the genetic algorithm module 422 may include a hardware structure (e.g., a neural network processing device) specialized in the processing of ultra-fine crack data learning. Machine learning of the genetic algorithm module 422 may be performed in the specialized hardware structure, or may be performed through a separate server (e.g., the artificial intelligence server 430).

A learning algorithm of the genetic algorithm module 422 may include, for example, supervised learning, unsupervised learning, semi-supervised learning, reinforcement learning, or regression learning, but is not limited to the above-described example. The genetic algorithm module 422 may include a plurality of artificial neural network layers. The artificial neural network may be one of a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-networks, or a combination of the two or more, but is not limited to the above-described example. In addition to the hardware structure, the genetic algorithm module 422 may additionally or alternatively include a software structure.

In various embodiments, the genetic algorithm module 422 may design the data learning model described above based on the artificial neural network structure 100 illustrated in FIG. 1.

According to various embodiments, the genetic algorithm module 422 may receive commands or instructions from the memory 423 and control the respective components according to the received commands or instructions to perform various functions. The genetic algorithm module 422 may be implemented as a central processing unit (CPU), a micro control unit (MCU), a micro processor unit (MPU), or the like.

According to an embodiment, various data related to the genetic algorithm module 422 may be stored in the memory 423. For example, a stress intensity factor of a signal (e.g., an elastic wave signal) corresponding to a crack generation source may be stored in the memory 423. Further, According to an embodiment, the memory 423 may further store the crack growth rate degree according to the stress intensity factor, the designated maintenance time information, the spare part inventory status information, the spare part warehousing plan information, and the power reserve rate information of the system during the preventive maintenance. The above-described data may be stored in the memory 423 as structured data, e.g., as a table.

According to various embodiments, the memory 423 may be electrically connected to a processor on which the genetic algorithm module 422 is mounted. The memory 423 may store various programs for operating the ultra-fine crack detection device 420, and various commands and/or instructions for operating the ultra-fine crack detection device 420. The memory 423 may include at least any one of an internal memory or an external memory. The internal memory may include at least one of a volatile memory (such as a DRAM, an SRAM, or an SDRAM), a nonvolatile memory (e.g., one time programmable ROM (OTPROM), a PROM, an EPROM, an EEPROM, a mask ROM, a flash ROM, a Flash memory, a hard drive, or a solid state drive (SSD)). The external memory may include a secure digital (SD), Micro-SD, Mini-SD, or universal serial bus (USB) memory or the like that may be connected with the ultra-fine crack detection device 420 through various interfaces.

According to an embodiment, the output module 424 may output information related to the crack growth rate degree and information related to the preventive maintenance scheduling derived based on the genetic algorithm module 422. For example, when the crack growth rate corresponding to at least one of the systems 411a of the small modular reactor 410 is large based on the genetic algorithm module 422, the output module 424 may provide data related to the corresponding state as a visual element through a display.

According to an embodiment, the communication module 425 may support establishment of a direct (e.g., wired) communication channel or a wireless communication channel between the ultra-fine crack detection device 420 and the artificial intelligence server 430, and communication execution through the established communication channel. The communication module 425 may include one or more communication processors which are operated independently from the processor, and support the direct (e.g., wired) communication or the wireless communication. In various embodiments, the communication module 425 may include a wireless communication module (e.g., a cellular communication module, a short-range wireless communication module, or a global navigation satellite system (GNSS) communication module) or a wireless communication module (e.g., a local area network (LAN) communication module, or a power line communication module).

According to various embodiments, the ultra-fine crack detection device 420 may transmit and/or receive various data related to the genetic algorithm module 422 from the artificial intelligence server 430 that is physically separated from the ultra-fine crack detecting device 420. For example, the artificial intelligence server 430 may build up an environment related to the machine learning of the genetic algorithm module 422 and transmit data (e.g., defect sample data) for analyzing a defect in each of the plurality of systems to the ultra-fine crack detection device 420 via the network 401.

According to various embodiments, the ultra-fine crack detection device 420 may be a wearable device corresponding to at least one of a smart glass, a smart watch, a smart ring, or a head mounted display (HMD) wearable on a body of a user. Alternatively, the ultra-fine crack detection device 420 may be an unmanned flying device (e.g., a drone) that is steerable according to a user's manipulation.

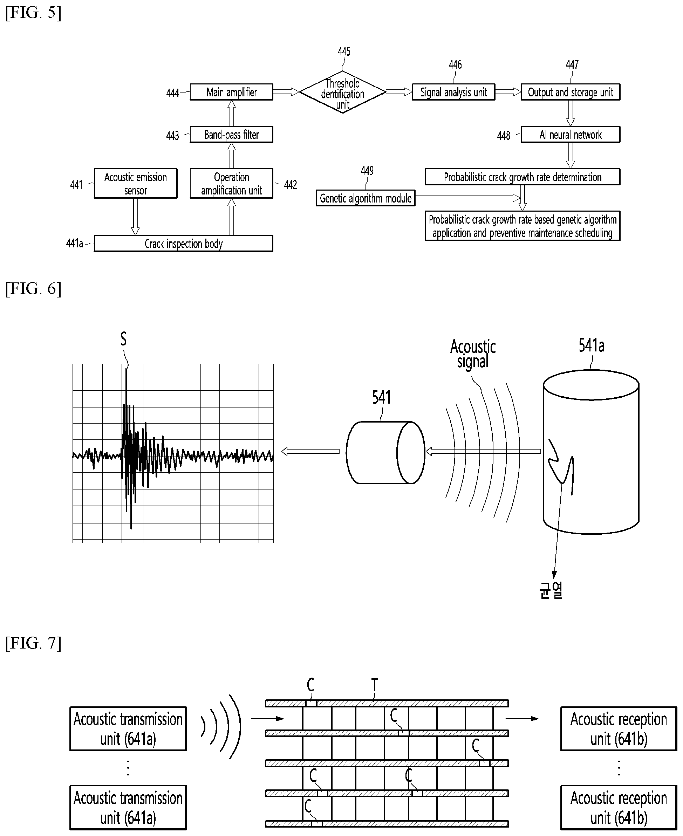

FIG. 5 is a diagram illustrating preventive maintenance scheduling of the AI-based ultra-fine crack detection target for the plant system stability diagnosis according to an embodiment.

According to an embodiment, the crack detection system may set the preventive maintenance scheduling from a maintenance and repair perspective after a plurality of lines in the plant site have been constructed. To this end, the crack detection system may further include an acoustic emission sensor 541, an operation amplification unit 542, a band-pass filter 543, a main amplifier 544, a threshold identification unit 545, a signal analysis unit 546, an output and storage unit 547, an AI neural network 548, and a genetic algorithm module 549.

According to an embodiment, the acoustic emission sensor 541 may emit an acoustic signal toward a crack inspection body T (e.g., a plurality of heat exchangers).

According to an embodiment, the operation amplification unit 542 may pass a designated signal (e.g., an elastic wave signal) except for a noise signal based on a signal reflected from the crack inspection body T with respect to the emitted acoustic signal.

According to an embodiment, the band-pass filter 543 may filter a signal having a designated bandwidth from the designated signal that passes through the operation amplification unit 542.

According to an embodiment, the main amplifier 544 may amplify a signal filtered by the band-pass filter 543.

According to an embodiment, the threshold identification unit 545 may extract a signal having a signal level equal to or higher than a preset threshold from the signal amplified by the main amplifier 544.

According to an embodiment, the signal analysis unit 546 may generate elastic wave signal analysis information including a pulse counter, a signal duration, a maximum amplitude, frequency analysis, an amplitude distribution, a defect location on the crack inspection body T, and the like based on the signal extracted by the threshold identification unit 545. Based on the generated elastic wave signal analysis information, the signal analysis unit 546 may generate defect information including whether the crack inspection body T being broken, whether the crack being generated, the size of the defect, the type of defect, a location of the defect, and a progress degree of the defect.

According to an embodiment, after storing the defect information related to the crack inspection body T generated by using the signal analysis unit 546, the output and storage unit 547 may output the defect information through an oscilloscope, a display, or the like. For example, the output and storage unit 547 may output a waveform corresponding to a burst signal or a continuous signal indicating a defect related to the crack inspection body T on the display. Here, the burst signal may be a signal according to crack generation, dislocation movement, and growth failure of the crack inspection body T. The continuous signal may be a signal according to plastic deformation and leakage of a fluid.

According to an embodiment, the AI neural network 548 may determine, based on each of the burst signal and the continuous signal, whether the defect degree of the crack inspection body T corresponds to any one of the plurality of crack growth rates. For example, the AI neural network 548 may determine the crack growth rate of the burst signal corresponding to the defect information generated by using the signal analysis unit 546 as one of the first to fifth crack growth rates according to the stress intensity factor, as shown in [Table 1] below.

[Table 1]

| Classification | Crack growth rate Level 1 | Crack growth rate Level 2 | Crack growth rate Level 3 | Crack growth rate Level 4 | Crack growth rate Level 5 |
|---|---|---|---|---|---|
| Burst signal | Stress intensity factors 1 to 20 | Stress intensity factors 20 to 40 | Stress intensity factors 40 to 60 | Stress intensity factors 60 to 80 | Stress intensity factors 80 to 100 |
| Continuous signal | Stress intensity factors 1 to 20 | Stress intensity factors 20 to 40 | Stress intensity factors 40 to 60 | Stress intensity factors 60 to 80 | Stress intensity factors 80 to 100 |

According to an embodiment, the genetic algorithm module 549 may perform preventive maintenance scheduling of a nuclear plant system based on the designated maintenance time information, the spare part inventory status information, the spare part warehousing plan information, the power reserve rate information of the system during the preventive maintenance (e.g., a power reserve ratio calculated as a result of calculating (total amount of supplied power - maximum power demand) / maximum power requirement* 100) in addition to the crack growth rate determined by using the AI neural network 548. For example, the genetic algorithm module 549 may calculated a first solution of an objective function for the preventive maintenance scheduling based on the growth rate degree according to the defect degree of the crack inspection body T, the designated maintenance time information, the spare part inventory status information, the spare part warehousing plan information, and the power reserve rate information of the system during preventive maintenance. A process of calculating the first solution may include a first calculation process of designating an initial solution, a second calculation process of calculating a code-specific fitness of the initial solution and storing a temporary solution, a third calculation process of generating a child solution based on intersection and mutation, and a fourth calculation process of repeating generations to calculate a convergence model.

According to an embodiment, maintenance period data according to a general plant capacity may be as shown in [Table 2] below.

[Table 2]

| Power plant | Power Plant #1 | Power Plant #2 | Power Plant #3 | Power Plant #4 | Power Plant #5 | Power Plant #6 | Power Plant #7 |
|---|---|---|---|---|---|---|---|
| Capacity (MW) | 1,000 | 1,000 | 1,400 | 1,400 | 950 | 950 | 700 |
| Maintenance period (week) | 6 | 6 | 8 | 8 | 5 | 5 | 4 |

In an embodiment, the maximum power demand data during the maintenance period of the power plant corresponding to [Table 2] may be as shown in [Table 3] below.

[Table 3]

| Period (week) | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Maximum power demand (MW) | 2,000 | 2,500 | 2,200 | 1,900 | 1,700 | 2,100 | 1,800 | 1,600 | 1,700 | 2,300 | 2,400 | 2,600 | 2,400 | 2,105 | 2,000 | 1,985 |

According to an embodiment, maintenance schedules of the power plants calculated by using the above-described genetic algorithm module 549 may be as shown in [Table 4] below.

[Table 4]

| Power plant | Power Plant #1 | Power Plant #2 | Power Plant #3 | Power Plant #4 | Power Plant #5 | Power Plant #6 | Power Plant #7 |
|---|---|---|---|---|---|---|---|
| Capacity (MW) | 1,000 | 1,000 | 1,400 | 1,400 | 950 | 950 | 700 |
| Optimal maintenance schedule (week) | 7~12 | 6~11 | 1~8 | 9~16 | 8~12 | 11~15 | 2~5 |

According to an embodiment, a power reserve rate of a week corresponding to each of the optimal maintenance schedules determined based on [Table 4] may be as shown in [Table 5] below.

[Table 5]

| Period (week) | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Power reserve rate | 15 | 15.1 | 15.2 | 15.4 | 16 | 15.6 | 15.5 | 15.7 | 15.9 | 15.1 | 15.8 | 16.1 | 15.1 | 15 | 15.2 | 15.3 |

FIG. 6 is a diagram illustrating a process of receiving an elastic wave signal after emitting an acoustic signal of the AI-based ultra-fine crack detection system for the plant system stability diagnosis according to an embodiment.

According to an embodiment, the acoustic emission sensor 641 may emit an acoustic signal toward an inspection point of the crack inspection body T. Further, the acoustic emission sensor 641 may receive an elastic wave signal reflected from the corresponding inspection point. As a result, the ultra-fine crack detection device 420 may extract a signal having a signal level equal to or higher than a preset threshold from the signal amplified through the operation amplification unit 542, the band-pass filter 543, and the main amplifier 544.

FIG. 7 is a diagram illustrating a process of receiving an elastic wave signal after emitting an acoustic signal of the AI-based ultra-fine crack detection system for the plant system stability diagnosis according to an embodiment.

According to an embodiment, an acoustic emission sensor (e.g., the acoustic emission sensor 641) may be divided into an acoustic transmission unit 741a and an acoustic reception unit 741b according to conditions of a power plant site (e.g., structural characteristics of the plant system). For example, an acoustic transmission unit 741a may be disposed on one side of the crack inspection body T (e.g., a pipe or a tube of the steam generator), and an acoustic reception unit 741b may be disposed on the other side. The acoustic transmission unit 741a disposed on the one side may emit the acoustic signal toward the inspection point of the crack inspection body T. The acoustic reception unit 741b disposed on the other side may receive the elastic wave signal (e.g., the burst signal) reflected from the inspection point, and confirm the presence or absence of a crack C on the inspection point. As a result, the ultra-fine crack detection device 420 may extract a signal having a signal level equal to or higher than a preset threshold from the signal amplified through the operation amplification unit 542, the band-pass filter 543, and the main amplifier 544 to confirm whether the crack C occurs on the inspection point.

According to various embodiments, the acoustic transmission unit 741a and the acoustic reception unit 741b may be disposed one by one on both sides with the crack inspection body T interposed therebetween, or a plurality thereof may be disposed on both sides. In a case where the plurality of sound transmission units 741a are disposed on one side of the crack inspection body T, the acoustic signals emitted from each of the plurality of sound emission units 741a may have different phase differences from each other.

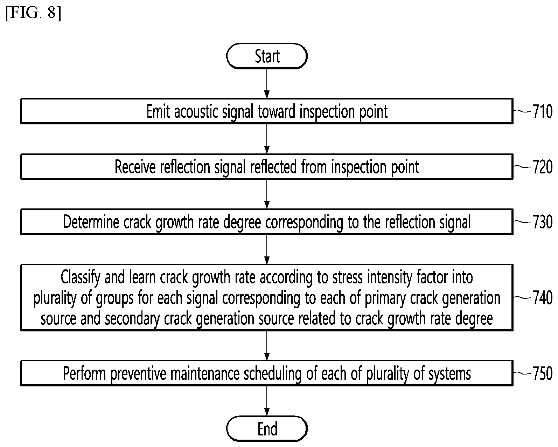

FIG. 8 is a flowchart illustrating an AI-based ultra-fine crack detection method for a plant system stability diagnosis according to an embodiment.

Referring to operation 810, the ultra-fine crack detection device 420 may emit an acoustic signal in a designated frequency band toward inspection points of at least some of the plurality of systems constructed within the plant site. For example, the sensor module 421 may emit a sound wave toward a point of a pipe connecting between the first system including the pressurizer and the steam generator and the second system including at least the turbine and the generator.

Referring to operation 820, the ultra-fine crack detection device 420 may receive a reflection signal reflected from the point after emitting the acoustic signal in operation 810. For example, the sensor module 421 may emit an elastic wave signal reflected from a point of the pipe connecting between the first system including the pressurizer and the steam generator and the second system including at least the turbine and the generator.

Referring to operations 830 and 840, the ultra-fine crack detection device 420 may determine a crack growth rate degree corresponding to the reflection signal received from the sensor module 421 based on a probabilistic crack growth rate mapping table. For example, the genetic algorithm module 422 may determine the crack growth rate degree by analyzing and diagnosing the elastic wave signal received from the sensor module 421 based on data learned by classifying the crack growth rate according to the stress intensity factor into a plurality of groups for each signal corresponding to each of the primary crack generation source and the secondary crack generation source. Here, the primary crack generation source may include at least one of plastic deformation, crack growth, dislocation, and phase transformation. In addition, the secondary crack generation source may include at least one of leakage, friction, and a chemical reaction.

Referring to operation 850, the ultra-fine crack detection device 420 may perform preventive maintenance scheduling of each of the plurality of systems based on the determined crack growth rate degree, designated maintenance time information, spare part inventory status information, spare part warehousing plan information, and power reserve rate information of the system during preventive maintenance.

While the present invention has been described in connection with what is presently considered to be practical exemplary embodiments, it is to be understood that the present invention is not limited to the disclosed embodiments, but, on the contrary, is intended to cover various modifications and equivalent arrangements included within the spirit and scope of the appended claims.

## Claims

1. An AI-based ultra-fine crack detection system for a plant system stability diagnosis, comprising:

a small modular reactor constituted by a plurality of systems; and
an ultra-fine crack detection device determining, based on reflection signals for at least some systems of the plurality of systems, crack growth rate degrees of the at least some systems,
wherein the ultra-fine crack detection device includes
a sensor module emitting acoustic signals toward inspection points of the at least some systems of the plurality of systems, and then receiving the reflection signal reflected from the inspection points with respect to the emitted acoustic signals, and
a genetic algorithm module determining crack growth rate degrees corresponding to the received reflection signals based on a probabilistic crack growth rate mapping table.

**2.** The AI-based ultra-fine crack detection system for a plant system stability diagnosis of claim 1, wherein the genetic algorithm module classifies and learns a crack growth rate according to a stress intensity factor for each signal corresponding to each of a primary crack generation source and a secondary crack generation source related to the crack growth rate degree into a plurality of groups.

**3.** The AI-based ultra-fine crack detection system for a plant system stability diagnosis of claim 2, wherein

the primary crack generation source includes at least one of plastic deformation, crack growth, dislocation, and phase transformation, and
the secondary crack generation source includes at least one of leakage, friction, and a chemical reaction.

**4.** The AI-based ultra-fine crack detection system for a plant system stability diagnosis of claim 1, wherein
the genetic algorithm module performs preventive maintenance scheduling of each of the plurality of systems based on the determined crack growth rate degree, designated maintenance time information, spare part inventory status information, spare part warehousing plan information, and power reserve rate information of the system during preventive maintenance.

**5.** The AI-based ultra-fine crack detection system for a plant system stability diagnosis of claim 4, wherein the ultra-fine crack detection device further includes an output module outputting an audio or an image, and
the output module outputs, as the audio or image, at least one of information related to the determined crack growth rate degree and information related to the preventive maintenance scheduling.

**6.** The AI-based ultra-fine crack detection system for a plant system stability diagnosis of claim 1, wherein the ultra-fine crack detection device is a wearable device corresponding to at least one of a smart glass, a smart watch, a smart ring, or a head mounted display (HMD) wearable on a body of a user.

**7.** The AI-based ultra-fine crack detection system for a plant system stability diagnosis of claim 1, wherein the plurality of systems are divided into a first system at least including a small modular reactor, a primary coolant, a pressurizer, a reactor coolant pump (RCP) and a plurality of steam generators, a second system at least including a steam turbine and a generator, and a third system (yellow portion) at last including a condenser and a feedwater pump.

[FIG. 1]

100
hidden layers (120)
output layer (130)
input layer
(110)

[FIG. 2]

Non-Radioactive
Water Vapor
Cooling Tower
Primary Loop
Secondary Loop
Third Loop
Transmission Lines
Carrying Electricitu
To Customers
Warm Moist Air
Nuclear Reactor
(Boiler)
Fuel
Turbine
Generator
Water Spary
Non-Radioactive Warm Water
Condenser
Non-Radioactive Cool Water Return

[FIG. 3]

PZR
TH
TC
TC
TH
TC

[FIG. 4]

Small modular reactor (310)
First system (311a)
⋮
n-th system (311a)
Ultra-fine crack detection device (320)
Sensor module (321)
Memory (323)
Genetic algorithm module (322)
Output module (324)
Communication module (325)
301
Network
330
Artificial intelligence server

[FIG. 5]

445
446
447
444
Main amplifier
Threshold dentification unit
Signal analysis unit
Output and storage unit
443
Band-pass filter
448
AI neural network
449
441
Acoustic emission sensor
Operation amplification unit
442
Probabilistic crack growth rate determination
Genetic algorithm module
Probabilistic crack growth rate based genetic algorithm application and preventive maintenance scheduling
441a
Crack inspection body

[FIG. 6]

S
Acoustic signal
541a
541
균열

[FIG. 7]

C
T
C
C
C
C
C
Acoustic transmission unit (641a)
Acoustic transmission unit (641a)
Acoustic reception unit (641b)
Acoustic reception unit (641b)

[FIG. 8]

Start
Emit acoustic signal toward inspection point
710
Receive reflection signal reflected from inspection point
720
Determine crack growth rate degree corresponding to the reflection signal
730
Classify and learn crack growth rate according to stress intensity factor into plurality of groups for each signal corresponding to each of primary crack generation source and secondary crack generation source related to crack growth rate degree
740
Perform preventive maintenance scheduling of each of plurality of systems
750
End

Europäisches
Patentamt
European
Patent Office
Office européen
des brevets

# EUROPEAN SEARCH REPORT

Application Number

EP 25 18 1983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MEYER R M ET AL: "Requirements for prognostic health management of passive components in advanced small modular reactors", 2013 IEEE CONFERENCE ON PROGNOSTICS AND HEALTH MANAGEMENT (PHM), IEEE, 24 June 2013 (2013-06-24), pages 1-8, XP032495979, DOI: 10.1109/ICPHM.2013.6621425 [retrieved on 2013-10-04] | 1-5,7 | INV. G01N29/06 G01N29/22 G01N29/44 |
| Y | * the whole document * ----- | 6 | |
| Y | WO 2022/049849 A1 (HITACHI ZOSEN CORP [JP]) 10 March 2022 (2022-03-10) * paragraph [0015]; figure 2 * ----- | 6 | |
| A | RAJ BALDEV ET AL: "Assessment of microstructures and mechanical behaviour of metallic materials through non-destructive characterisation", INTERNATIONAL MATERIALS REVIEWS, [Online] vol. 48, no. 5, 1 October 2003 (2003-10-01), pages 273-325, XP093336231, US ISSN: 0950-6608, DOI: 10.1179/095066003225010254 Retrieved from the Internet: URL:https://journals.sagepub.com/doi/pdf/10.1179/095066003225010254> [retrieved on 2025-11-14] * the whole document * ----- | 1-7 | |
| | | | TECHNICAL FIELDS SEARCHED (IPC) |
| | | | G01N |

The present search report has been drawn up for all claims

| Place of search | Date of completion of the search | Examiner |
|---|---|---|
| Munich | 17 November 2025 | Roetsch, Patrice |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 18 1983

This annex lists the patent family members relating to the patent documents cited in the above-mentioned European search report. The members are as contained in the European Patent Office EDP file on The European Patent Office is in no way liable for these particulars which are merely given for the purpose of information.

17-11-2025

| Patent document cited in search report | Publication date | Patent family member(s) | Publication date |
|---|---|---|---|
| WO 2022049849 A1 | 10-03-2022 | JP 2022042029 A | 14-03-2022 |
| | | WO 2022049849 A1 | 10-03-2022 |

EPO FORM P0459

For more details about this annex : see Official Journal of the European Patent Office, No. 12/82